# EUROPÄISCHE PATENTSCHRIFT

(11) **EP 0 765 742 B1**
(45) Veröffentlichungstag und Bekanntmachung des Hinweises auf die Patenterteilung: **02.05.2003**
(21) Anmeldenummer: 96114927.5
(22) Anmeldetag: 18.09.1996
(51) Int. Cl.: B32B 27/32, B32B 27/08

(54) **Mehrschichtige Verpackungsfolie auf Polypropylenbasis, sowie deren Verwendung**
Multi-layered polypropylene-based packaging film and its use
Film d'emballage multicouche à base de polypropylène et son utilisation

(30) Priorität: 28.09.1995 AT 160695
(43) Veröffentlichungstag der Anmeldung: 02.04.1997
(73) Patentinhaber: Borealis GmbH, 2323 Schwechat-Mannswörth (AT)
(72) Erfinder: Grünberger, Manfred, Ing., 4050 Traun (AT); De Mink, Paul, Ing., 4240 Freistadt (AT); Wolfsberger, Anton, Ing., 4210 Engerwitzdorf (AT)
(74) Vertreter: VA TECH Patente GmbH & Co

(56) Entgegenhaltungen:
- EP-A- 0 230 113
- EP-A- 0 282 773
- EP-A- 0 380 145
- EP-A- 0 538 747
- EP-A- 0 588 223

## Beschreibung

Verpackungsfolien auf Kunststoffbasis sind bereits aus der Literatur bekannt, da diese im allgemeinen leicht verarbeitet werden können, ein geringes Gewicht aufweisen, gegenüber Umwelteinflüssen beständig sind und ihr Aussehen stark verändert werden kann. An die Verpackungsfolien werden dabei verschiedenste Ansprüche gestellt. Zum einen muß die Verpackung ausreichend dicht sein, um das verpackte bzw. eingesiegelte Gut, insbesondere Nahrungs- und Arzneimittel, ausreichend zu schützen und die Handhabung der versiegelten Produkte, insbesondere beim Transport, ausreichend sicher zu machen, zum anderen soll beim Öffnen der Packung das Kriterium der leichten Abziehfähigkeit erfüllt sein, wobei die Verpackungsfolie nicht nur leicht, sondern in definierter Weise abziehbar sein soll, d.h. die Folie darf nicht an nicht vorgesehenen Stellen zerreißen. Als drittes Kriterium sollte die Verpackungsfolie außerdem noch eine gute Verarbeitbarkeit aufweisen, sodaß die Folien auch bei möglichst niedrigen Temperaturen und mit möglichst vielen unterschiedlichen Folien oder Formteilen auf Polypropylenbasis siegelbar sind. Diese Kriterien konnten mit bisher bekannten Verpackungen, wie etwa aus EP-B-0178061, EP-B-0292 192 oder EP-A1-588223 bekannt, nicht immer ausreichend realisiert werden, sodaß sich die Aufgabe gestellt hat, neue Verpackungsfolien zu finden, die die oben angeführten Kriterien erfüllen und sich durch eine gegenüber dem Stand der Technik verbesserte mechanische Beständigkeit, hohe Dichtigkeit, leichte Abziehbarkeit und einfache Verarbeitbarkeit auszeichnen. Diese Aufgabe konnte erfindungsgemäß durch eine Verpackungsfolie gelöst werden, deren Siegelschicht aus einer Mischung aus Randomblockcopolymeren mit einem Ethylenpolymerisat besteht.

Gegenstand der vorliegenden Erfindung ist demnach eine Verpackungsfolie, die aus
a) einer Siegelschicht aus einer Mischung aus
   a₁) 40 bis 80 Gew.% einer Polymermischung, bestehend aus
      a_{1.1}) 60 bis 98 Gew.% eines kristallinen Copolymeren aus Propylen mit Ethylen und /oder einem α-Olefin der allgemeinen Formel CH₂=CHR, wobei R ein linearer oder verzweigter Alkylrest mit 2 - 8 Kohlenstoffatomen ist, enthaltend 85 - 99,5 Gew.% Propylen und
      a_{1.2}) 2 bis 40 Gew.% eines elastischen Copolymers aus Ethylen mit Propylen und/oder einem α-Olefin der allgemeinen Formel CH₂=CHR, enthaltend 20 - 70 Gew.% Ethylen und
   a₂) 20 bis 60 Gew.% eines Ethylenpolymerisates und
b) einer mono- oder mehrschichtigen Trägerschicht aus thermoplastischen Polymeren besteht

Vorzugsweise ist die Verpackungsfolie nach der Versiegelung mit einer Kraft von höchstens 30N/15mm abziehbar.

Die Siegelschicht enthält eine C₂-C₃ Polymermischung a₁).

Unter dieser C₂- C₃ Polymermischung sind dabei Copolymere bzw. Randomblockcopolymere aus Propylen und Ethylen und/oder einem α-Olefin der Formel CH₂=CHR zu verstehen, die, in Anlehnung an übliche Blockcopolymerherstellungsverfahren, dadurch erhalten werden, daß im 1.Schrit bzw. im 1. Reaktor anstelle eines reinen Polypropylen (PP)-Homopolymeren ein Ethylen-Propylenrandomcopolymeres hergestellt wird, in das im 2.Schritt bzw. im 1. Reaktor aus einem entsprechenden Monomergemisch Ethylen-Propylen-Kautschukblöcke (EPR) einpolymerisiert werden. Die Herstellung kann beispielsweise analog EP-A-O 373 660 erfolgen.

Die Polymermischung a₁) enthält dabei a_{1.1}) 60 - 98 Gew.% eines kristallinen Copolymeren aus Propylen mit Ethylen und/oder einem α-Olefin der allgemeinen Formel CH₂=CHR.

R bedeuted dabei einen linearen oder verzweigten Alkylrest mit 2 - 8 Kohlenstoffatomen. Beispiele für geeignete Comonomere sind Buten, Penten oder Hexen. Bevorzugt sind Propylen-Ethylencopolymere. Der Anteil an Propylen im Copolymeren liegt zwischen 85 und 99,5 Gew.%, bevorzugt zwischen 90 und 98 Gew.%.

Die zweite Komponente a_{1.2}) der Polymermischung a₁ enthält 2 bis 40 Gew.% eines elastischen Copolymeren aus Ethylen mit Propylen und/oder einem α-Olefin der allgemeinen Formel CH₂ = CHR. R hat wiederum obige Bedeutung. Bevorzugt sind Ethylen-Propylencopolymere. Der Anteil an Ethylen beträgt dabei 20 bis 70 Gew.%, bevorzugt 25 bis 60 Gew.%.

Als Komponente a₂) werden 20 bis 60 Gew.% eines Ethylenpolymerisates eingesetzt. Unter Ethylenpolymerisat sind dabei sowohl Homopolymerisate des Ethylens als auch Copolymerisate des Ethylens mit anderen Comonomeren zu verstehen. Geeignete Copolymerisate des Ethylens enthalten beispielsweise noch untergeordnete Anteile von ungesättigten Comonomeren, beispielsweise von Vinylacetat oder von C₃ bis C₁₀-Alkylenen, beispielsweise von Propylen, Buten, Hexen oder Octen. Bevorzugt werden jedoch Homopolymerisate eingesetzt. Die verwendeten Homopolymerisate weisen dabei eine Dichte von 0,89 bis 0,98 g/cm³ auf. Besonders bevorzugt werden low density polyethylene (LDPE) mit einer Dichte zwischen 0.915 bis 0.935 g/cm³ eingesetzt.

Die Siegelschicht kann gewünschtenfalls übliche Zusätze wie etwa Stabilisatoren, Kohlenwasserstoffharze, Farbstoffe, Pigmente, Antioxidantien, Gleitmittel, Antistatika, UV-Absorber, Viskositätsmodifizierer, Antiblockmittel, Schlagzähmacher, Mattierungsmittel, Flammschutzmittel, Biostabilisatoren, Nukleierungsmittel, Härter u.a. enthalten. Gegebenenfalls können auch übliche Füllstoffe zugesetzt werden. Als Füllstoffe eignen sich beispielsweise Siliciumdioxide, insbesondere in Form von Glas oder Quarz, Silikate, insbesondere in Form von Talkum, Titanate, TiO₂, Aluminiumoxid. Calciumcarbonate, insbesondere in Form von Kreide, Magnesite, MgO, Eisenoxide, Siliciumcarbide- oder nitride, Bariumsulfat, Kaolin und dergleichen. Bevorzugt ist die Siegelschicht jedoch ungefüllt.

Zur Herstellung der erfindungsgemäß zu verwendenden Siegelschicht a) werden das Randomblockcopolymere a₁) und das gewünschte Ethylenpolymerisat a₂) in geeigneten Vorrichtungen, beispielsweise in Extrudern oder Mischern miteinander vermengt und mit üblichen Technologien weiterverarbeitet.

Die Siegelschicht a) weist bevorzugt eine Schichtdicke von 4 bis 50, besonders bevorzugt von 8 bis 25 µm auf. Neben der Siegelschicht enthält die erfindungsgemäße Verpackungsfolie eine Trägerschicht b), die sowohl monoschichtig als auch mehrschichtig sein kann und aus einem thermoplastischen Polymeren oder aus einem Gemisch mehrerer thermoplastischer Polymere besteht.

Als thermoplastische Polymere kommen dabei alle geläufigen, thermoplastisch verformbaren Kunststoffe in Frage. Beispiele für derartige Thermoplaste sind z.B. Polyolefine, Polyamide, Polyester, Polystyrole, Polyoxyalkylene, Polyvinylchlorid, Polyethersulfone, Polyurethane, Polyethylenoder Polybutylenterephthalat, Polyimide, Polyetherketone, Polycarbonat u.a.,

Bevorzugt werden Polyolefine, besonders bevorzugt Polypropylene (PP) als Trägerschicht verwendet. Unter Polypropylenen sind dabei sowohl PP-Homopolymere als auch Blockcopolymere, Randomcopolymere oder Randomblockcopolymere mit untergeordneten Anteilen anderer C₂ bis C₁₀-Alkene oder deren Mischungen zu verstehen. Bei Verwendung von PP-Homopolymeren kann auch hochkristallines PP eingesetzt werden. Als hochkristallines PP eignen sich beispielsweise solche Polypropylene, wie sie in EP-OS 255 693 beschrieben sind, bevorzugt solche mit einem hohen isotaktischen Pentadenanteil, der zwischen 0.955 und 1.0 liegt (Meßmethode in EP-B-0255693 beschrieben).

Die Thermoplasten können gewünschtenfalls auch mit bis zu 50 Gew.%, bevorzugt mit 10 bis 20 Gew.% an Füllstoffen versetzt werden.

Als Füllstoffe eignen sich wiederum die bereits beschriebenen Füllstoffe. Weiters kann die Trägerschicht weitere übliche Zusätze analog der Siegelschicht enthalten.

Die Trägerschicht b) kann, wie bereits oben erwähnt, monoschichtig als auch mehrschichtig sein, sodaß sich verschiedene Aufbauvarianten ergeben.

Bevorzugte Varianten sind dabei folgende:

Nach Variante 1) besteht die Trägerschicht aus nur einer Schicht b₁) aus einem der oben erwähnten Thermoplasten oder einem Gemisch aus mehreren Thermoplasten, die gegebenenfalls einen oder mehrere der oben beschriebenen üblichen Füllstoffe enthalten kann.

Bevorzugt besteht die Schicht b₁) aus einem ungefüllten oder gefüllten Polyolefin, besonders bevorzugt aus Polypropylen. Das Polypropylen kann dabei ein PP-Homopolymeres, ein hochkristallines PP-Homopolymerisat oder eine Mischung daraus oder eine Mischung mit einem PP-Blockcopolymeren oder Randomblockcopolymeren oder Randomcopolymeren sein, wobei die Copolymeren einen untergeordneten Anteil an anderen C₂ bis C₁₀-Alkenen enthalten.

Nach Variante 2) besteht die Trägerschicht aus den Schichten b₁) und einer zusätzlichen Schicht b₂), die als Deckschicht fungiert. Die Schicht b₁) entspricht , MFI (190/2,16): 0,75 g/10 minPolyesterbasis, sowie übliche polymere Haftvermittler.

Nach einer weiteren Variante (Variante 3) kann die Trägerschicht zusätzlich noch eine Barriereschicht b₄) etwa aus Polyamid, Polyethylentherephthalat, Ethylenvinylalkohol enthalten, um beispielsweise den Eintritt von Sauerstoff zu verhindern.

Es können sich dabei verschiedene Schichtfolgen ergeben. Bevorzugt sind beispielsweise folgende Schichtfolgen in der Trägerschicht
b₁ - b₃ - b₄ - b₃ - b₂ oder
b₁ - b₃ - b₄ - b₂

Bei allen oben angeführten Varianten und übrigen Schichtfolgen der Schichten b₁ bis b₄ kann gewünschtenfalls auf die letzte dieser Schichten bzw. auf die Außenseite der Trägerschicht eine Lackschicht, etwa aus hochwärmeformbeständigem Lack, eine Metallisierung, sowie metalloxidische Schichten etwa aus SiO₂, MgO oder Al₂O₃, die gegebenenfalls auch lackiert werden können, aufgebracht werden.

Es ist weiters auch möglich, die Folie durch übliche Verfahren zu bedrucken.

Die Gesamtschichtdicke der Trägerschicht b liegt bei etwa 20 bis 3000 µm, bevorzugt bei etwa 50 bis 2000 µm

Die Herstellung der erfindungsgemäßen Verpackungsfolie erfolgt üblicherweise durch möglichst flächengleiches Auftragen der Siegelschicht a) auf die Trägerschicht b). Derartige Herstellungsverfahren für mehrschichtige Folien erfolgen beispielsweise nach dem Coextrusions-, Chill-Roll-, Blasfolien- oder Glättwerkverfahren und/oder durch Coextrusionsbeschichten oder nach dem Kaschierverfahren.

Beim Beschichtungsverfahren beispielsweise wird zunächst die zu verwendende Beschichtungsmasse auf eine Trägerbahn aufgetragen, anschließend werden die Arbeitsgänge Gelieren, Kühlen, Abziehen und Aufwickeln durchgeführt. Bei der eigentlichen Coextrusionsbeschichtung wird in einer Beschichtungsanlage mit einem Schmelzefilm, der in einem Extruder aufgeschmolzen und über eine Breitschlitzdüse ausgetragen wird und aus einer oder mehreren Polymerschichten bestehen kann, beschichtet. Der dabei entstehende Verbund aus der Siegelschicht a) und der Trägerschicht b) wird anschließend in einer Kühl-Anpreßwalzen-Einheit abgekühlt und geglättet. Danach erfolgt die Aufwicklung der Verbundbahn in einer entsprechenden Wickelstation.

Beim Kaschierverfahren werden analog dem Beschichtungsverfahren ebenfalls die Arbeitsgänge Auftragen der Beschichtungsmasse auf die Trägerbahn, Glätten und Kühlen, Abziehen und Aufwickeln durchgeführt. Bei der eigentlichen Extrusionskaschierung läßt man eine vorgefertigte Trägerbahn in einen Glättwerkwalzenstuhl, der 3 bis 4 Walzen aufweist, einlaufen. Dabei wird die Trägerbahn vor dem ersten Walzenspalt mit einem Schmelzefilm, der in einem Extruder aufgeschmolzen und über eine Breitschlitzdüse ausgetragen wird, beschichtet. Vor dem zweiten Walzenspalt läßt man eine zweite vorgefertigte Bahn zulaufen. Der dabei entstehende Gesamtverbund wird beim Durchlauf durch den zweiten Walzenspalt geglättet, anschließend gekühlt, abgezogen und in einer Wickelstation aufgewickelt.

Nach dem Blas- oder Breitschlitz-Coextrusionsverfahren werden allgemein zunächst die Mischung der Siegelschicht a) und das thermoplastische Polymer der Trägerschicht b) in unterschiedlichen Extrudern unter geeigneten Bedingungen aufgeschmolzen und anschließend in Form der Schmelzeströme unter Ausformen eines Mehrschichten-Schmelzestroms im Coextrusionswerkszeug zusammengeführt. Danach erfolgt das Austragen, Abziehen und Abkühlen der Mehrschichtenschmelzebahn und das Aufwickeln des Verbundes.

Die verschiedenen Verfahrensvarianten können je nach gewünschtem Folienaufbau gegebenenfalls auch untereinander kombiniert werden.

Derartige Verfahren werden üblicherweise bei Temperaturen von 170 bis 280°C, Drücken von 70 bis 250 bar und mittleren Durchlaufzeiten von 5 bis 20 min durchgeführt. Dabei wird die Siegelschicht a) beispielsweise auf eine Trägerschicht b, die als ein- oder mehrschichtige flexible Deckelfolie oder als ein- oder mehrlagige Tiefziehfolie ausgebildet ist, aufgebracht.

im Falle der flexiblen Deckelfolie wird eine Folie mit einer Gesamtdicke der Schichten a + b von 30 bis 400 µm, bevorzugt von 50 bis 250 µm hergestellt. Die so erhaltene Deckelfolie wird dann über die Siegelschicht mit einem entsprechenden Verpackungsmaterial auf Polypropylenbasis wie etwa einem PP-Tiefziehbehältnis mittels üblicher Siegel- und Schweißverfahren versiegelt. Die Siegelkontaktseite ist dabei bevorzugt eine PP-Schicht. Nach der Versiegelung besteht eine Siegelnahtfestigkeit, die einem Berstdruck von über 200 mbar standhält, ohne dabei aufzuplatzen. Die Öffnung der so erhaltenen Verpackungen erfolgt durch einfaches Abziehen der Deckelfolie unter geringer Kraftbeanspruchung von höchstens 30N/15mm gemäß ISO 527

Weiters können flexible Folien mit einer Gesamtdicke der Schichten a + b von etwa 30 bis 150 µm so miteinander gesiegelt werden, daß eine Beutelfolie erhalten wird, wobei sich durch leichtes Abziehen gegeneinander die Folien leicht trennen lassen. Dabei sind folgende Varianten bevorzugt:
- b + a gesiegelt gegen b + a oder
- b + a gesiegelt gegen eine Monofolie bestehend aus einem Polypropylen, wobei als Polypropylen PP-Homopolymere, PP-Blockcopolymere, PP-Randomcopolymere und PP-Randomblockcopolymere in Frage kommen, oder
- b + a gesiegelt gegen eine Mehrschichtfolie bestehend aus einer Siegelschicht aus Polypropylen und einer oder mehreren Trägerschichten aus thermoplastischen Polymeren.

Eine weitere Anwendung stellt die Herstellung einer Thermoformfolie mit einer Gesamtdicke der Schichten a + b von 150 bis 350 µm dar. Die Thermoformfolie wird zu einem Deckel tiefgezogen und läßt sich leicht auf ein Verpackungsbehältnis, z.B. eine Schale oder einen Becher siegeln, wobei die Siegelkontaktseite eine PP-Schicht ist. Auch hier läßt sich durch leichtes Abziehen des Tiefziehdeckels mit einer Kraft von höchstens 30 N/15 mm die Verpackung öffnen. Bevorzugt ist eine Kraft von höchstens 15 N/15 mm zum Öffnen nötig.

Die Siegelschicht a kann weiters auf eine bevorzugt 0,15 bis 3 mm dicke, ein- oder mehrlagige Tiefziehfolie beispielsweise mittels Glättwerkverfahren oder Chillrollverfahren aufgebracht und anschließend thermoverformt bzw. tiefgezogen werden, sodaß tiefgezogene Verpackungsbehälter erhalten werden, in denen die Siegelschicht an der Innenseite inkludiert ist. Die Schichten der Tiefziehfolie entsprechen dabei der oben beschriebenen Trägerschicht b. Die Versiegelung der so erhaltenen Verpackung erfolgt sodann mit beliebigen Deckelfolien, die aus einer oder mehreren Schichten auf Polypropylen oder aus einer Kombination verschiedener Thermoplasten bestehen, wobei die Siegelkontaktseite bevorzugt eine PP-Schicht, besonders bevorzugt eine PP-Homopolymerschicht ist. Der Vorteil dieser tiefgezogenen Verpackungsbehälter ist, daß diese in einem einzigen Verfahrensschritt tiefgezogen und ausgeformt werden können und daß insbesondere nicht das nachträgliche Anbringen von Nuten, Einkerbungen etc. notwendig ist, um den Aufreißbereich oder Zerreißbereich für das definierte Öffnen des Verpackungsbehälters zu definieren.

Die Siegeltemperatur liegt jeweils je nach Gesamtfoliendicke zwischen etwa 85 und 240°C, bevorzugt zwischen 120 und 200°C.

Die erfindungsgemäßen Verpackungen bzw. Verpackungsfolien zeichnen sich durch einfache Verarbeitbarkeit, leichte Abziehfähigkeit bzw. Öffenbarkeit, hohe Dichtigkeit und hohe mechanische Beständigkeit aus, sodaß sie sich zur Verwendung für leicht öffenbare Verpackungen jeglicher Art, d.h. für den Non-Food und Food-Bereich eignen. Bevorzugt werden sie im Lebensmittelbereich, besonders bevorzugt für die Verpackung von Molkereiprodukten, wie z.B. Yoghurt, eingesetzt.

### Beispiel:

Folgende Dreischichtfolie mit einem Schichtaufbau a(10µm)-b₁(60µm)-b₂(10µm) wurde mittels Coextrusionsverfahren hergestellt:
- Trägerschicht bestehend aus
   b₁: Mischung aus 60 Gew.% PP-Blockcopolymer mit MFI (230/2,16) = 5 g/10 min und
      40 Gew.% hochkristallines PP-Homopolymerisat mit MFI(230/2,16) = 8 g/min und
   b₂: Hochkristallines PP-Homopolymerisat mit MFI (230/2,16) = 8 g/10 min
- Siegelschicht a:
   bestehend aus einer Mischung aus
   a₁: 60 Gew.% Polymermischung aus kristallinem Propylen/Ethylen-Copolymeren mit 5,4 Gew.% C₂-Anteil und elastischem Ethylen/Propylen-Copolymeren mit einem EPR Anteil von 15 Gew.% (RAHECO^{R}, MFI (230/2,16) = 10 g/10 min) und
   a₂: 40 Gew.% Ethylenpolymerisat mit einer Dichte von 0,923 g cm³, MFI (190/2,16): 0,75g/10min

Die Folie wurde auf eine Propylenhomopolymerfolie mit einem MFI (230/2,16) von 3 g/10 min und einer Dicke von 300µm gesiegelt.
Siegeltemperatur: 120 - 180°C, Siegelzeit 0,5 sec, Siegeldruck: 0,8 N/mm₃ Im Zugversuch wurden die Abziehkräfte der Siegelfolie von der PP-Homofolie in Abhängigkeit von der Siegeltemperatur ermittelt.
Abzugswinkel: 180°
Abzugsgeschwindigkeit: 100 mm/min
Probenbreite: 15 mm

| Abziehkraft [N/15mm] bei Siegeltemperatur von | | | |
|---|---|---|---|
| 120 °C | 140°C | 160°C | 180°C |
| 2,0 | 6,0 | 8,0 | 9,5 |

## Patentansprüche

1. Verpackungsfolie bestehend aus
a) Einer Siegelschicht aus einer Mischung aus
a1) 40 bis 80% einer Polymermischung, bestehend aus
a1.1)60 bis 98 Gew% eines kristallinen Copolymeren aus Propylen mit Ethylen und/oder einem α-Olefin der allgemeinen Formel *CH*₂ *= CH*-*R,* wobei *R* ein linearer oder verzweigter Alkylrest mit 2 - 8 Kohlenstoffatomen ist, enthaltend 85 - 99,5 Gew% Propylen und
a1.2) 2 bis 40 Gew% eines elastischen Copolymers aus Ethylen mit Propylen und/oder einem α-Olefin der allgemeinen Formel *CH*_{*2*} *= CH* - *R*, enthaltend 20 - 70 Gew.% Ethylen und
a2) 20 bis 60 Gew% eines Ethylenpolymerisates und
b) einer mono- oder mehrschichtigen Trägerschicht aus thermoplastischen Polymeren.

2. Verpackungsfolie nach Anspruch 1, **dadurch gekennzeichnet, dass** sie nach der Versiegelung gegen eine Polypropylenschicht mit einer Kraft von höchstens 15N/15mm abziehbar ist.

3. Verpackungsfolie nach Anspruch 1, **dadurch gekennzeichnet, dass** als thermoplastische Polymere Polyolefine, Polyamide, Polyurethane, Polyester, Polyvinylchlorid oder Mischungen daraus verwendet werden.

4. Verpackungsfolie nach Anspruch 1, **dadurch gekennzeichnet, dass** die Trägerschicht b monoschichtig ist und aus nur einer Schicht b₁ aus einem Polyolefin, das gegebenenfalls Füllstoffe enthalten kann, besteht.

5. Verpackungsfolie nach Anspruch 4, **dadurch gekennzeichnet, dass** als Polyolefin ein Polypropylen-Homopolymeres, ein hochkristallines Polypropylen-Homopolymeres oder Mischungen mit einem Polypropylenblockcopolymerenoder Randomblockpolymeren oder Polypropylenrandomcopolymeren, wobei die Copolymeren einen untergeordneten Anteil an anderen C₂ bis C₁₀-Alkenen enthalten, verwendet wird.

6. Verpackungsfolie nach Anspruch 1, **dadurch gekennzeichnet, dass** die Trägerschicht b mehrschichtig ist und aus einer Schicht b₁, die gegebenenfalls Füllstoffe enthalten kann und einer Deckschicht b₂ besteht, wobei b₂ aus einem Polypropylenhomopolymeren, einem hochkristallinen Polypropylenhomopolymeren oder aus einem wärmeformbeständigen Thermoplasten wie Polyamid, Polyethylentherephthalat, Polycarbonat oder Polyoxyalkylen besteht.

7. Verpackungsfolie nach Anspruch 6, **dadurch gekennzeichnet, dass** die Deckschicht b₂ aus einem wärmeformbeständigen Thermoplasten oder aus Papier besteht und dass sich zwischen den Schichten b₁ und b₂ eine oder mehrere Haftvermittlerschichten b₃ befinden.

8. Verpackungsfolie nach Anspruch 1, **dadurch gekennzeichnet, dass** die Trägerschicht b mehrschichtig ist und aus den Schichten b₁, b₂, b₃, sowie einer zusätzlichen Barriereschicht b₄ besteht, wobei die Schichtfolge b₁-b₃-b₄-b₃-b₂ oder b₁-b₃-b₄-b₂ sein kann und die Barriereschicht b₄ aus Polyamid, Polyethylentherephthalat oder Ethylenvinylalkohol ist.

9. Verpackungsfolie nach Anspruch 1, **dadurch gekennzeichnet, dass** auf der Außenseite der Trägerschicht eine Lackschicht, eine Papierschicht, eine Metallisierung oder eine metalloxidische Schicht aus SiO₂, Al₂O₃ oder MgO, die gegebenenfalls lackiert ist, aufgebracht wird.

10. Verwendung einer Verpackungsfolie nach Anspruch 1 zur Herstellung von Verpackungen für den Food- und Non-Food-Bereich.

## Claims

1. Packaging film which comprises
a) a sealing ply comprising a mixture of
a1) 40 to 80% of a polymer blend consisting of
a1.1) 60 to 98% by weight of a crystalline copolymer of propylene with ethylene and/or an α-olefin of the general formula *CH*_{*2*}*=CH*-*R*, where *R* is a linear or branched alkyl radical having 2 - 8 carbon atoms, containing 85 - 99.5% by weight of propylene, and
a1.2) 2 to 40% by weight of a resilient copolymer of ethylene with propylene and/or an α-olefin of the general formula *CH*_{*2*}*=CH*-*R*, containing 20 - 70% by weight of ethylene, and
a2) 20 to 60% by weight of an ethylene polymer and
b) a monolayer or multilayer base ply comprising thermoplastic polymers.

2. Packaging film according to Claim 1, **characterized in that** it can be peeled off with a force of not more than 15 N/15mm after sealing against a polypropylene ply.

3. Packaging film according to Claim 1, **characterized in that** the thermoplastic polymers used are polyolefins, polyamides, polyurethanes, polyesters, polyvinyl chloride or mixtures thereof.

4. Packaging film according to Claim 1, **characterized in that** the base ply b is monolayer and consists of only one ply b₁ comprising a polyolefin which, if required, may contain fillers.

5. Packaging film according to Claim 4, **characterized in that** the polyolefin used is a polypropylene homopolymer, a highly crystalline polypropylene homopolymer or a mixture with a polypropylene block polymer or a random block polymer or a polypropylene random copolymer, the copolymers containing a minor amount of other C₂- to C₁₀-alkenes.

6. Packaging film according to Claim 1, **characterized in that** the base ply b is multilayer and comprises a ply b₁, which if required may contain fillers, and a top ply b₂, b₂ comprising a polypropylene homopolymer, a highly crystalline polypropylene homopolymer or a thermoplastic, such as polyamide, polyethylene terephthalate, polycarbonate or polyoxyalkylene, having heat distortion resistance.

7. Packaging film according to Claim 6, **characterized in that** the top ply b₂ comprises a thermoplastic having heat distortion resistance or comprises paper, and **in that** one or more adhesion promoter plies b₃ are present between the plies b₁ and b₂.

8. Packaging film according to Claim 1, **characterized in that** the base ply b is multilayer and comprises the plies b₁, b₂ and b₃ and an additional barrier ply b₄, it being possible for the ply sequence to be b₁-b₃-b₄-b₃-b₂ or b₁-b₃-b₄-b₂ and the barrier ply b₄ comprising polyamide, polyethylene terephthalate or ethyl vinyl alcohol.

9. Packaging film according to Claim 1, **characterized in that** a lacquer layer, a paper layer, a metal layer or a metal oxide layer comprising SiO₂, Al₂O₃ or MgO, which if required is lacquered, is applied to the outer surface of the base ply.

10. Use of a packaging film according to Claim 1 for the production of packagings for the food and nonfood sectors.

## Revendications

1. Film d'emballage constitué de
a) une couche thermosoudable à base d'un mélange de
a1) 40 à 80 % en poids d'un mélange de polymères constitué de
a1.1) 60 à 98 % en poids d'un copolymère cristallin de propylène avec l'éthylène et/ou une α-oléfine de formule générale CH₂=CH-R, R étant un radical alkyle linéaire ou ramifié ayant de 2 à 8 atomes de carbone, contenant de 85 à 99,5 % en poids de propylène, et
a1.2) 2 à 40 % en poids d'un copolymère élastique d'éthylène avec le propylène et/ou une α-oléfine de formule générale CH₂=CH-R, contenant de 20 à 70 % en poids d'éthylène, et
a2) 20 à 60 % en poids d'un polymère d'éthylène, et
b) une couche monocouche ou multicouche de support à base de polymères thermoplastiques.

2. Film d'emballage selon la revendication 1, **caractérisé en ce qu'**il est apte au pelage, après le thermocollage, contre une couche de polypropylène avec une force d'au maximum 15 N/15 mm.

3. Film d'emballage selon la revendication 1, **caractérisé en ce qu'**on utilise comme polymères thermoplastiques des polyoléfines, des polyamides, des polyuréthannes, des polyesters, du poly(chlorure de vinyle) ou des mélanges de ceux-ci.

4. Film d'emballage selon la revendication 1, **caractérisé en ce que** la couche de support b est monocouche et consiste seulement en une couche b₁ à base d'une polyoléfine, qui peut éventuellement contenir des charges.

5. Film d'emballage selon la revendication 4, **caractérisé en ce qu'**on utilise comme polyoléfine un homopolymère de polypropylène, un homopolymère de polypropylène hautement cristallin ou des mélanges avec un copolymère séquencé ou polymère séquencé statistique de polypropylène ou des copolymères statistiques de polypropylène, les copolymères contenant une proportion minime d'autres alcènes en C₂-C₁₀.

6. Film d'emballage selon la revendication 1, **caractérisé en ce que** la couche de support b est multicouche et est constituée d'une couche b₁ qui peut éventuellement contenir des charges et d'une couche de recouvrement b₂, b₂ étant constituée d'un homopolymère de polypropylène, d'un homopolymère de polypropylène hautement cristallin ou d'une matière thermoplastique à stabilité dimensionnelle à chaud, telle que le polyamide, le poly(éthylène téréphtalate), le polycarbonate ou le polyoxyalkylène.

7. Film d'emballage selon la revendication 6, **caractérisé en ce que** la couche de recouvrement b₂ est constituée d'une matière thermoplastique à stabilité dimensionnelle à chaud ou de papier et **en ce qu'**une ou plusieurs couches de promoteur d'adhérence b₃ se trouvent entre les couches b₁ et b₂.

8. Film d'emballage selon la revendication 1, **caractérisé en ce que** la couche de support b est multicouche et est constituée des couches b₁, b₂, b₃ ainsi que d'une couche barrière supplémentaire b₄, l'ordre des couches pouvant être b₁-b₃-b₄-b₃-b₂ ou b₁-b₃-b₄-b₂ et la couche barrière b₄ étant à base de polyamide, de poly(éthylène téréphtalate) ou d'alcool éthylvinylique.

9. Film d'emballage selon la revendication 1, **caractérisé en ce que** sur la face externe de la couche de support est appliquée une couche de laque, une couche de papier, une métallisation ou une couche de type oxyde métallique à base de SiO₂, Al₂O₃ ou MgO, qui est éventuellement laquée.

10. Utilisation d'un film d'emballage selon la revendication 1, pour la fabrication d'emballages pour le secteur alimentaire ou non alimentaire.
